# EUROPÄISCHE PATENTSCHRIFT

(11) **EP 0 924 263 B1**
(45) Veröffentlichungstag und Bekanntmachung des Hinweises auf die Patenterteilung: **28.07.1999**
(21) Anmeldenummer: 97810736.5
(22) Anmeldetag: 03.10.1997
(51) Int. Cl.: C09B 31/08, C09D 11/00

(54) **Disazofarbstoffe, deren Herstellung und Verwendung**
Disazo dyes, their preparation and use thereof
Colorants disazoiques, leur préparation et leur utilisation

(43) Veröffentlichungstag der Anmeldung: 23.06.1999
(73) Patentinhaber: ILFORD Imaging Switzerland GmbH, 1723 Marly 1 (CH)
(72) Erfinder: Peter, Heinz, 1700 Freiburg (CH)

(56) Entgegenhaltungen:
- EP-A- 0 356 080
- EP-A- 0 597 672
- EP-A- 0 735 106
- DE-A- 3 436 891
- US-A- 5 616 696

## Beschreibung

### Technisches Gebiet

Die Erfindung bezieht sich auf neue Disazofarbstoffe und ihre Salze, ein Verfahren zu ihrer Herstellung, ihren Einsatz in Färbe- und Druckverfahren sowie Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht z. B. dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, indem ungeladene Tröpfchen in den Auffangbehälter abgelenkt werden.
Beim nichtkontinuierlichen Verfahren, dem sogenannten ,,Drop on demand", werden die Tintentropfen nur dann erzeugt, wenn auf Grund der digitalen Daten ein Bildpunkt dargestellt werden muss.

Die wichtigsten Bestandteile einer Tinte für den Tintenstrahldruck sind die Farbstoffe. Obwohl schon eine ganze Anzahl verschiedener Farbstoffe vorgeschlagen worden sind, vermag keiner alle an ihn gestellten Anforderungen zu erfüllen.

C.I. Lebensmittelschwarz 2 (Formel I) und Farbstoffe mit ähnlicher Struktur sind in der Patentanmeldung JP 59-093'766 als Farbstoffe für schwarze Tinten für den Tintenstrahldruck erwähnt. Diese Farbstoffe ergeben aber nur ein bläuliches Schwarz. Weiter ist die Lichtbeständigkeit der mit diesen Farbstoffen hergestellten Bilder ungenügend.

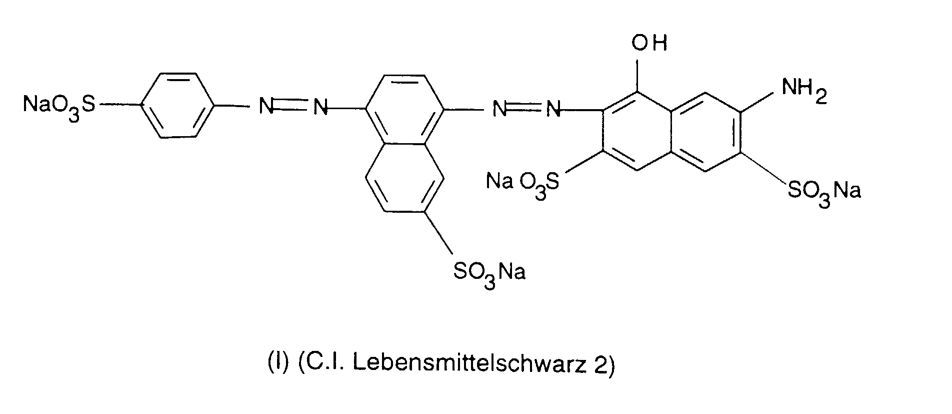

Schwarzfarbstoffe der allgemeinen Formel (II) oder Mischungen solcher Farbstoffe werden z. B. im Patent US 4'626'284 beschrieben, 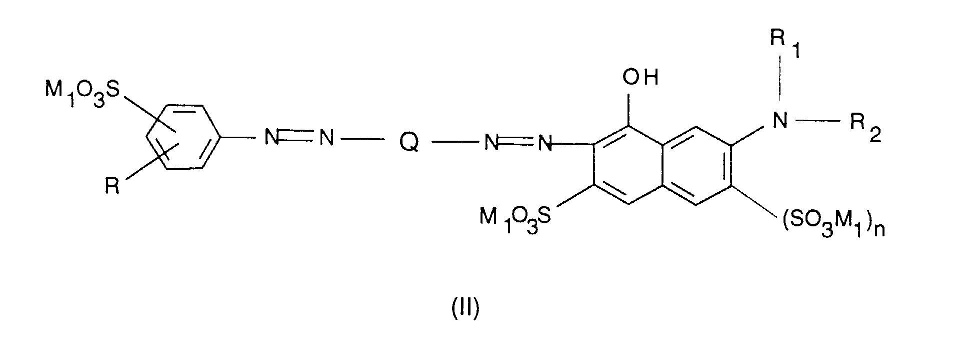 worin Q eine mit einem SO₃M₁-Rest substituierte Phenylen- oder Naphthylengruppe bedeutet; R ein Wasserstoffatom, eine niedere Alkylgruppe, eine niedere Alkoxygruppe, eine niedere Acylaminogruppe, eine Nitrogruppe oder ein Halogenatom; R₁ eine mit einem SO₃M₁-Rest oder einem COOM₁-Rest substituierte Phenylgruppe, eine mit einem COOM₁-Rest substituierte niedere Alkylgruppe oder eine mit einem niederen Alkylaminocarbonylrest substituierte niedere Alkylgruppe; R₂ ein Wasserstoffatom, eine mit einem COOM₁-Rest substituierte niedere Alkylgruppe oder eine mit einem niederen Alkylaminocarbonylrest substituierte niedere Alkylgruppe; M₁ ein Alkalimetallkation oder ein Ammoniumkation; und n 0 oder 1 ist.

Schwarzfarbstoffe der allgemeinen Formel (III) oder Mischungen solcher Farbstoffe werden z. B. im Patent US 4'724'001 beschrieben, 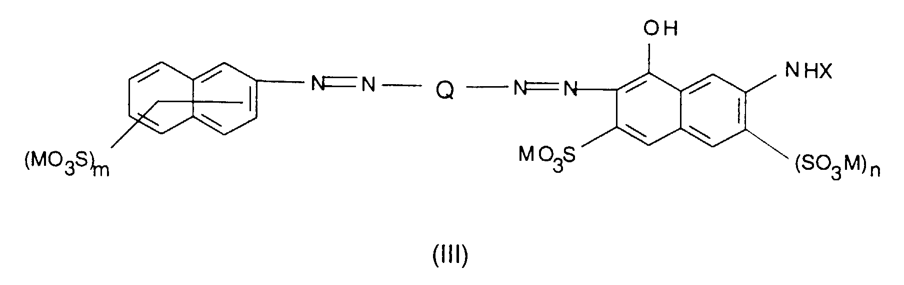 worin Q einen mit einer Methylgruppe, einer Methoxy- oder Ethoxy-Gruppe substituierten Phenylenrest oder einen mit einer SO₃M-Gruppe substituierten Naphthylenrest bedeutet; X ein Wasserstoffatom oder einen mit einer SO₃M-Gruppe substituierten Phenylrest; m ist 1 oder 2; n ist 1 wenn X Wasserstoff bedeutet und n ist 0 wenn X einen mit einer SO₃M-Gruppe substituierten Phenylrest oder wenn Q einen mit einer SO₃M-Gruppe substituierten Naphthylenrest bedeutet; und M ein Alkalimetallkation oder ein Ammoniumkation ist.

Anionische Schwarzfarbstoffe der allgemeinen Formel (IV) sind im Patent US 5'053'495 beschrieben, 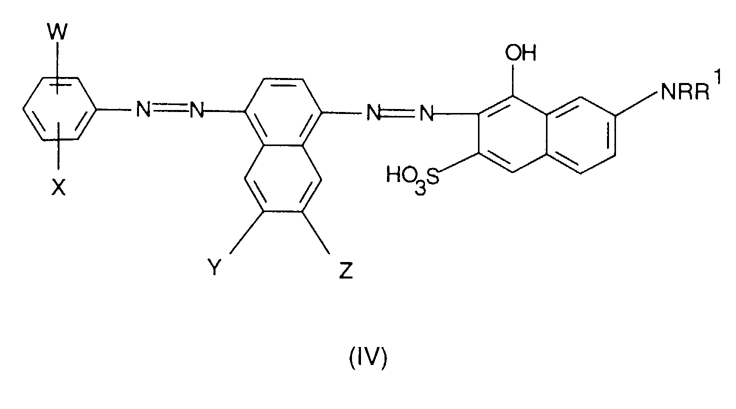 worin W COOH bedeutet; X wird aus der Gruppe bestehend aus Wasserstoff, COOH, SO₃H, Halogen, Hydroxy, Nitro, Cyan, Alkyl mit 1 bis 6 C Atomen, Alkoxy mit 1 bis 6 C Atomen und Acylamino mit 1 bis 6 C Atomen ausgewählt; Y bedeutet Wasserstoff, COOH oder SO₃H; Z Wasserstoff, COOH oder SO₃H; R und R¹ sind unabhängig voneinander Wasserstoff oder mit 0, 1 oder 2 COOR²-Gruppen substituierte Alkylreste mit 1 bis 6 C Atomen; und R² ist Wasserstoff oder ein Alkylrest mit 1 bis 6 C Atomen unter der Voraussetzung dass mindestens zwei COOH-Gruppen vorhanden sind und die Anzahl der COOH-Gruppen gleich oder grösser als die Anzahl der SO₃H-Gruppen ist. Bei diesen Farbstoffen wird eine pH-abhängige Wasserlöslichkeit beansprucht. Auf unbeschichtetem Papier mit einem pH zwischen 5 und 7 ist die Wasserlöslichkeit dieser Farbstoffe viel geringer als bei höherem pH. Deshalb werden diese Farbstoffe durch Wasser schlechter vom Substrat ausgewaschen als Farbstoffe ohne COOH-Gruppen.
Diese Farbstoffe zeigen aber den Nachteil, dass ihre Abriebfestigkeit schlecht ist, da sie leicht an der Oberfläche des Tintenaufnahmematerials aggregieren und nicht oder nur schlecht in dieses eindringen. Obwohl diese Farbstoffe auf unbeschichtetem oder beschichtetem Papier ein neutrales Schwarz zeigen, ergeben sie auf anderen Tintenaufnahmematerialien ein bläuliches Schwarz.

Schwarzfarbstoffe mit verbesserter Wasserfestigkeit der allgemeinen Formel (V) sind in der Patentanmeldung EP 0'612'820 beschrieben worden, 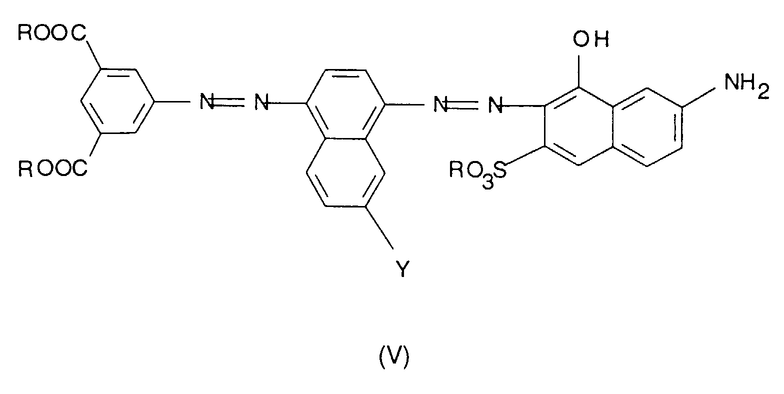 worin R NH₄ und Y Wasserstoff oder SO₃R ist. Auch diese Farbstoffe ergeben kein neutrales Schwarz und deshalb muss zur schwarzen Tinte zusätzlich ein Gelbfarbstoff zugegeben werden.

In der Patentanmeldung EP 0'597'672 werden Schwarzfarbstoffe der allgemeinen Formel (Vl) beschrieben, 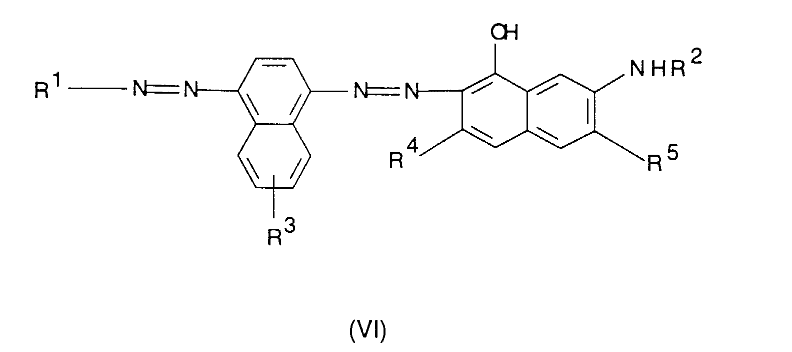 worin R¹ einen Phenyl- oder Naphthyl-Rest bedeutet, der gegebenenfalls mit OH, NH₂, SO₃M oder COOM substituiert sein kann, worin M ein Wasserstoffatom, ein Alkalimetallkation, ein Ammoniumkation oder das Kation eines Amins sein kann; R² einen Carboxyalkylrest, worin die Carboxy-Gruppe ein Salz mit einem Alkalimetall oder Ammoniak bilden kann, einen substituierten oder unsubstituierten Alkoxyalkylrest, einen substituierten oder unsubstituierten Phenylrest oder einen Hydroxyalkylrest; und R³, R⁴ und R⁵, die gleich oder verschieden voneinander sein können, unabhängig voneinander Wasserstoff oder SO₃M, wo M die gleiche Bedeutung wie oben hat, unter der Voraussetzung, dass R¹ kein mit einer SO₃M-Gruppe substituierter Phenyl-rest ist, wenn R³, R⁴ und R⁵ alle SO₃M bedeuten.
Diese Farbstoffe ergeben ebenfalls kein neutrales Schwarz und es muss zusätzlich ein Gelbfarbstoff zur schwarzen Tinte zugegeben werden.
Von den durch die allgemeine Formel (Vl) beschriebenen Farbstoffen, in denen R¹ einen mit einer SO₃H-Gruppe substituierten Phenylrest bedeutet und R³, R⁴ und R⁵ alle SO₃M bedeuten, können nur einige wenige Farbstoffe mit bestimmten Strukturen miteinander kombiniert werden, da andere Kombinationen zu schlechter Lagerfähigkeit der Tinten oder zu schlechter Lichtbeständigkeit der Bilder führen.

Schwarzfarbstoffe der allgemeinen Formel (VII) werden in der Patentanmeldung EP 0'735'106 beschrieben, 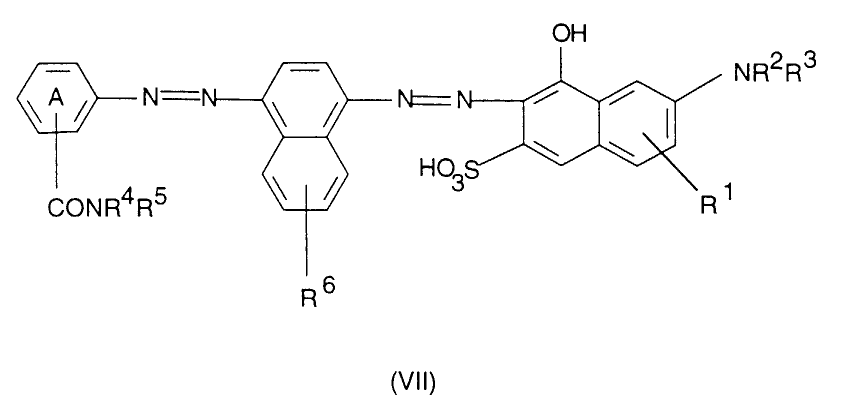 worin die Carboxamidogruppe des Rings A in o-, m- oder p-Stellung zur Azogruppe steht; R¹ Wasserstoff oder SO₃H bedeutet; R² und R³ unabhängig voneinander für Wasserstoff, einen gegebenenfalls substituierten Arylrest mit 6 oder 10 C-Atomen oder einen gegebenenfalls substituierten Alkylrest mit 1 bis 6 C-Atomen stehen; R⁴ und R⁵ unabhängig voneinander für Wasserstoff, einen gegebenenfalls substituierten C₆ - C₁₀ - Arylrest oder einen gegebenenfalls substituierten Alkylrest mit 1 bis 17 C-Atomen stehen und R⁶ Wasserstoff, COOH oder SO₃H bedeutet und der Ring A gegebenenfalls weiter substituiert ist.

Schwarzfarbstoffe der allgemeinen Formel (VIII) werden im Patent US 5'616'696 beschrieben, 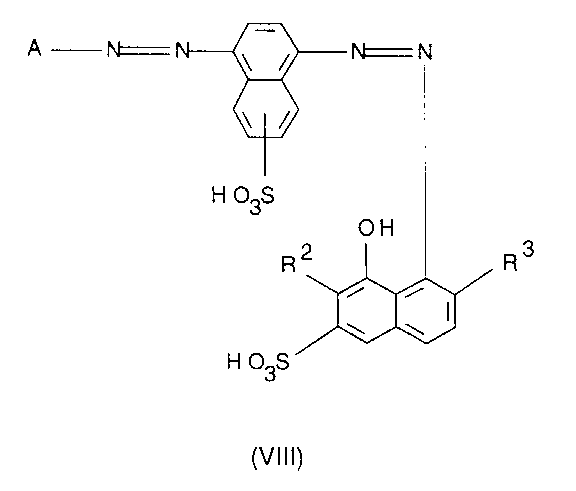 worin A einen 1-(3-Carboxy-4-hydroxyphenyl)-Rest; R² Wasserstoff oder eine aromatische Azogruppe und R³ Amino, aromatisch substituiertes Amino oder eine aromatische Azogruppe bedeuten.

Farbstoffe der allgemeinen Formel (VIII), worin R² für Wasserstoff und R³ für Amino stehen, ergeben kein neutrales, sondern ein stark blaustichiges Schwarz. Die Farbstoffe sind relativ schlecht löslich. Ihre Lichtechtheit ist schlechter als diejenige analoger Farbstoffe der allgemeinen Formel (VII).

Alle hier erwähnten Farbstoffe, die Stand der Technik sind, vermögen nicht alle gewünschten Anforderungen zu erfüllen, wenn sie in Tinten für den Tintenstrahldruck eingesetzt werden.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit und einer ausgezeichneten Lichtechtheit ergeben. Sie müssen in der Tinte stabil sein, auch wenn diese lange Zeit unter ungünstigen Bedingungen gelagert wird.

Verschiedene Zusammensetzungen für Tinten sind vorgeschlagen worden. Typische Tinten enthalten einen oder mehrere Farbstoffe, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit hervorragender Wasserfestigkeit.
(3) Die Tinte ergibt Bilder mit hervorragender Lichtbeständigkeit.
(4) Die Tinte ergibt Bilder mit hervorragender Abriebfestigkeit.
(5) Die Tinte verstopft die Tintenstrahldruckerdüsen nicht, auch wenn diese längere Zeit während Druckpausen nicht abgedeckt sind.
(6) Die Tinte kann lange Zeit gelagert werden, ohne dass ihre Qualität abnimmt.
(7) Die physikalischen Eigenschaften der Tinte, wie Viskosität, Leitfähigkeit und Oberflächenspannung liegen alle innerhalb vorgegebener, für die Anwendung geeigneter Grenzen.
(8) Die Tinte muss ungiftig, unbrennbar und unschädlich sein.

Für den Tintenstrahldruck sind ebenfalls Reaktivschwarzfarbstoffe vorgeschlagen worden z. B. in der Patentanmeldung EP 0'693'537. Tinten, die solche Farbstoffe mit reaktiven Gruppen enthalten, sind allerdings nicht lagerstabil und wegen ihrer möglichen Gesundheitsgefährdung auch weniger geeignet zur Handhabung in einer nichtchemischen Umgebung.

### Beschreibung der Erfindung

Ziel der Erfindung ist die Bereitstellung neuer schwarzer Disazofarbstoffe, insbesondere für den Tintenstrahldruck, mit hoher Löslichkeit, die Bilder oder Färbungen mit einem neutralen Schwarz ergeben, die eine hohe optische Dichte aufweisen, eine ausgezeichnete Wasserfestigkeit, eine ausgezeichnete Lichtechtheit und eine ausgezeichnete Abriebfestigkeit aufweisen.
Ein anderes Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger ein neutrales Schwarz ergeben.
Ein weiteres Ziel der Erfindung ist die Bereitstellung von Tinten, die alle vorhin erwähnten Anforderungen erfüllen.

Die vorliegende Erfindung bezieht sich auf neue Schwarzfarbstoffe der allgemeinen Formel (IX) 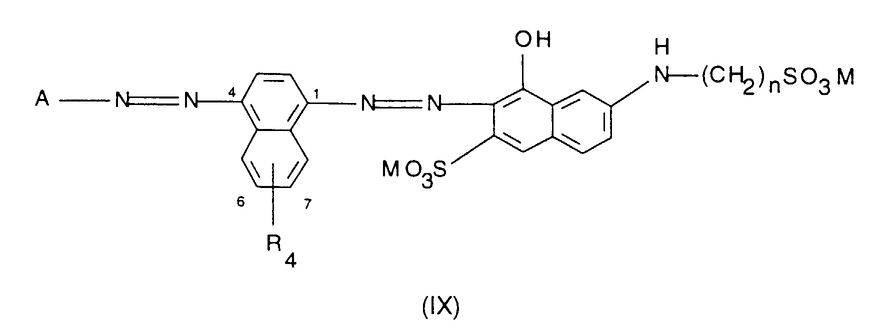 und der Formel (X) 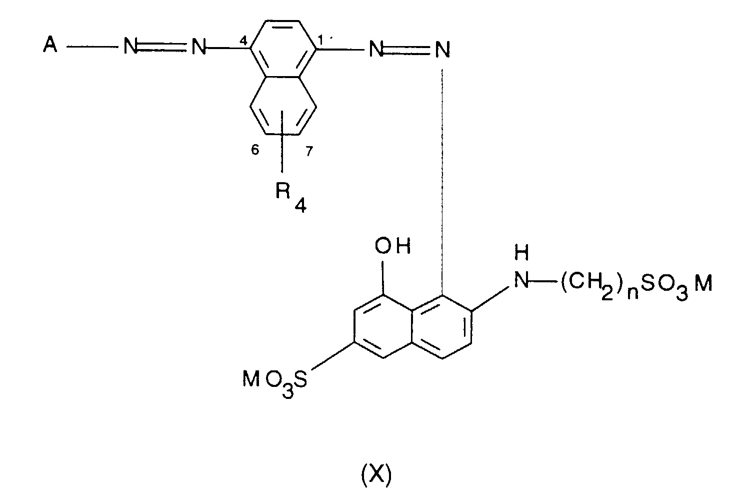 worin
- A: einen gegebenenfalls substituierten Phenyl- oder Naphthyl-Rest der allgemeinen Formel (Xl) bedeutet, 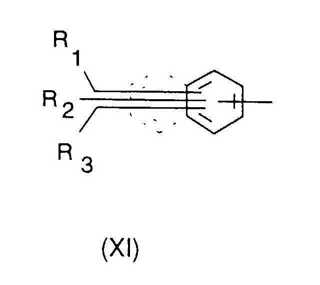
worin R₁, R₂ und R₃ unabhängig voneinander für
Wasserstoff, SO₃M, COOM; Carboxamido, N-substitiertes Carboxamido, insbesondere N-Carboxymethylcarboxamid und N-(2-Adipyl)-carboxamido, einen gegebenenfalls substituierten Alkylrest mit 1 bis 18 C-Atomen, insbesondere Hydroxymethyl, Carboxymethyl, Sulfomethyl, Phosphonomethyl, Hydroxyethyl, Carboxyethyl, Cyanoethyl und 4-Carboxybutyl, einen gegebenenfalls substituierten Alkoxyrest mit 1 bis 18 C-Atomen, insbesondere 2-Hydroxyethyloxy oder ω-Sulfoalkoxy, Halogen, Hydroxy, Cyan oder einen gegebenenfalls substituierten Thioalkylrest mit 1 bis 18 C-Atomen, insbesondere ω-Sulfothioethyl oder ω-Sulfothiopropyl, stehen, wenn A ein substituierter Phenyl-Rest ist;
oder unabhängig voneinander für
Wasserstoff, SO₃M oder COOM stehen, wenn A ein substituierter Naphthyl-Rest ist;
- R₄: Wasserstoff oder SO₃M bedeutet;
- n: ist 2, 3, oder 4;
und
- M: Wasserstoff, ein Metallkation oder ein Ammoniumkation bedeutet, das gegebenenfalls einen oder mehrere Alkylreste oder substituierte Alkylreste mit jeweils 1 bis 18 C-Atomen aufweist.

Wenn A ein substituierter Phenyl-Rest ist, so ist bevorzugt der Rest R₁ eine SO₃M- oder COOM-Gruppe und die Reste R₂ und R₃ werden aus der Gruppe bestehend aus Wasserstoff, Chlor, Hydroxy, COOM, gegebenenfalls substituiertes Alkyl mit 1 bis 12 C-Atomen, gegebenenfalls substituiertes Alkoxy mit 1 bis 12 C-Atomen ausgewählt.
Falls der Rest R₁ gegebenenfalls substituiertes Alkyl oder Alkoxy ist, so ist es besonders bevorzugt, wenn er 1 bis 6 C-Atome enthält.

Wenn A ein substituierter Naphthyl-Rest ist, so ist er bevorzugt mit 1 bis 3 SO₃M- oder COOM-Gruppen substituiert. Besonders bevorzugt sind 1 oder 2 SO₃M-Gruppen.

Es ist besonders bevorzugt, wenn in den Verbindungen der Formeln (IX) und (X) der Rest R₄ in Stellung 6 oder 7 ist.

Die Verbindungen der Formeln (IX) und (X) haben bevorzugt mindestens so viele SO₃M-Gruppen wie COOM-Gruppen. Es ist besonders bevorzugt, dass sie mehr SO₃M-Gruppen als COOM-Gruppen aufweisen.

Besonders bevorzugt sind Verbindungen der Formel (XII) 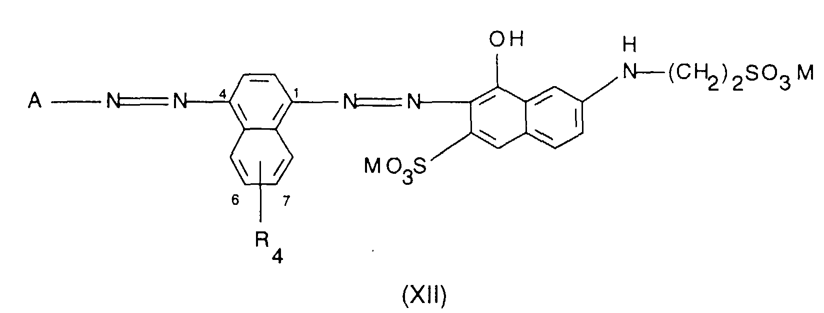 und der Formel (XIII) 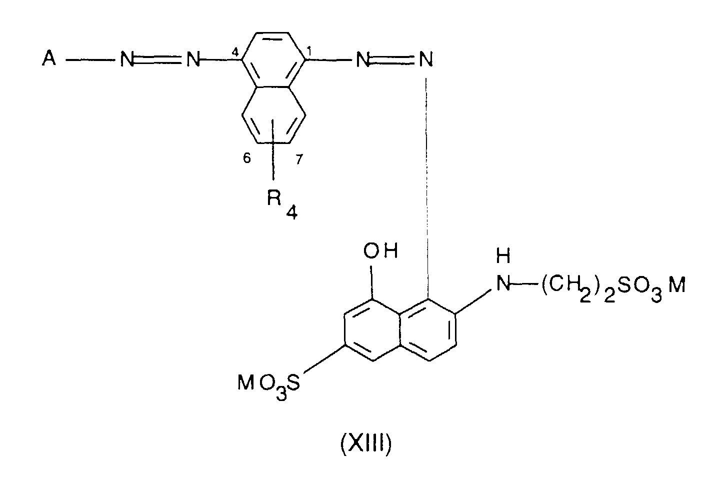 worin die Substituenten A und R₄ die vorhin erwähnte Bedeutung haben und n den Wert 2 annimmt.

Die Verbindungen der Formeln (IX), (X), (XII) und (XIII) können als freie Säuren oder als anorganische oder organische Salze dieser Säuren vorliegen. Vorzugsweise liegen sie in Form ihrer Alkali- oder Ammonium-Salze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methylammonium, Tris-[2-(2-methoxyethoxy)-ethyl]-ammonium, 8-Hydroxy-3,6-dioxaoctylammonium und Tetraalkylammonium wie z. B. Tetramethylammonium oder Tetrabutylammonium.

Die Erfindung betrifft nicht nur Farbstoffe der Formeln (IX), (X), (XII) und (XIII), sondern auch alle Tautomeren dieser Verbindungen.
Weiter betrifft die Erfindung nicht nur reine Farbstoffe der Formeln (IX), (X), (XII) und (XIII), sondern auch Gemische dieser Verbindungen.

Die Erfindung betrifft weiterhin ein Verfahren zur Herstellung der Verbindungen der Formeln (IX) und (X), das dadurch gekennzeichnet ist, dass ein Amin der Formel (XIV) 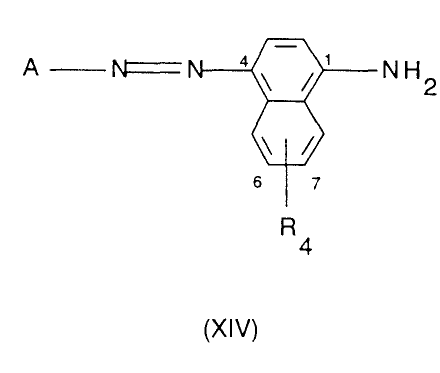 worin A die vorhin angegebene Bedeutung hat, diazotiert und anschliessend mit der Verbindung der Formel (XV) 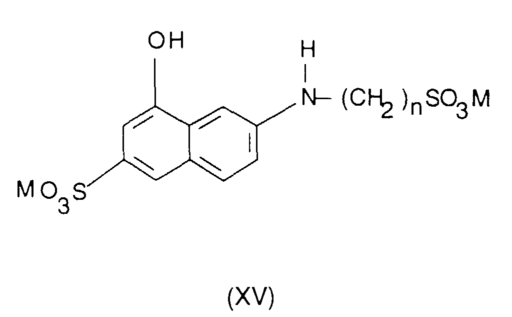 gekuppelt wird , wie es z. B. im Patent GB 2'289'473 beschrieben ist. Dabei erhält man je nach der Art des Amins (XIV), dem pH-Wert, bei dem die Kupplungsreaktion durchgeführt wird und der Art der Base, mit welcher der pH-Wert während der Kupplungsreaktion konstant gehalten wird, Farbstoffe der allgemeinen Formeln (IX) oder (XII) oder Gemische von Farbstoffen der Formeln (IX) und (X) respektive (XII) und (XIII).

Die erfindungsgemässen Farbstoffe der Formeln (IX), (X), (XII) und (XIII) färben cellulosehaltige Materialien, Papier, Baumwolle und Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen enthaltend mindestens einen Farbstoff der Formel (IX) oder (X). Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs.

Farbstoffe oder Mischungen von Farbstoffen der Formeln (IX) und (X) und insbesondere der Formeln (XII) und (XIII) sind ausgezeichnete Farbstoffe zur Herstellung von schwarzen Tinten für den Tintenstrahldruck.
Eine solche Tinte enthält eine oder mehrere der erfindungsgemässen Verbindungen in einem flüssigen wässrigen Lösungsmittel. Die Tinte enthält 0,5 bis 20 Gewichtsprozent, vorzugsweise 0,5 bis 5 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind z. B. in den Patenten US 4'626'284, 4'703'113, 4'963'189 und den Patentanmeldungen GB 2'289'473 und EP 0'425'150 und 0'597'672 beschrieben.

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Die Verbindung Nr. 5 aus Tabelle 1 wurde folgendermassen hergestellt :

### Suspension A:

13,5 g des Dinatriumsalzes der 1-Amino-4-(4-sulfophenylazo)-7-naphthalinsulfonsäure wurden in 90 ml Wasser suspendiert und unter Rühren 8 ml einer wässrigen Natriumnitritlösung (4N) zugegeben.

### Lösung B:

Zu 15 g Wasser / Eis wurden 17,5 ml wässrige Salzsäurelösung (37 %) zugegeben und unter Rühren auf eine Temperatur zwischen 0° -5° C abgekühlt.

### Suspension C:

Bei einer Innentemperatur von 0° - 5° C wurde unter Rühren innert 50 Minuten die Suspension A zur Lösung B zudosiert und anschliessend wurde 1 Stunde bei dieser Temperatur weitergerührt. Die im Überschuss vorhandene salpetrige Säure wurde anschliessend durch Reaktion mit Sulfaminsäure entfernt.

### Lösung D:

10,4 g des Natriumsalzes der N-(2-Sulfoethyl)-Gammasäure und 0,21 g Olin 10G (50%) (erhältlich bei Olin Corporation, Norwalk, USA) wurden in 45 g Wasser suspendiert und der pH-Wert mit Natronlauge (20%) auf 8 eingestellt. Die resultierende Lösung wurde auf eine Temperatur von 0° - 5° C abgekühlt.

### Herstellung des Farbstoffs:

Bei einer Innentemperatur von 0° - 5° C wurde unter Rühren innert 60 Minuten die Suspension C zur Lösung D zudosiert und der pH-Wert durch gleichzeitiges Zudosieren von Natronlauge (20%) bei 8 konstant gehalten. Nach beendeter Addition wurde 2 Stunden bei 0° - 5° C und anschliessend 16 Stunden bei Raumtemperatur weitergerührt. Der Farbstoff wurde durch Zugabe von Natriumchlorid ausgesalzen, der Niederschlag abfiltriert und durch zweimaliges Umfällen aus Wasser / Ethanol gereinigt. Man erhielt 16,5 g der Verbindung Nr. 5.

### Beispiel 2

Die Verbindung Nr. 21 (Gemisch von Farbstoffen der allgemeinen Formeln (XII) und (XIII)) aus Tabelle 2 wurde folgendermassen hergestellt :

### Suspension A:

21.6 g des Dinatriumsalzes der 1-Amino-4-(3-carboxy-4-hydroxyphenylazo)-7-naphthalinsulfonsäure wurden in 75 ml Wasser suspendiert und unter Rühren 13 ml einer wässrigen Natriumnitritlösung (4N) zugegeben.

### Lösung B:

Zu 75 g Wasser / Eis wurden 33 ml wässrige Salzsäurelösung (37 %) zugegeben und unter Rühren auf eine Temperatur zwischen 0° -5° C abgekühlt.

### Suspension C:

Bei einer Innentemperatur von 0° - 5° C wurde unter Rühren innert 45 Minuten die Suspension A zur Lösung B zudosiert und anschliessend wurde 2 Stunden bei dieser Temperatur weitergerührt. Die im Überschuss vorhandene salpetrige Säure wurde anschliessend durch Reaktion mit Sulfaminsäure entfernt.

### Lösung D:

18,5 g des Natriumsalzes der N-(2-Sulfoethyl)-Gammasäure und 2,1 g Di-Natriumhydrogenphosphat wurden in 75 g Wasser suspendiert und der pH-Wert mit Natronlauge (20%) auf 9 eingestellt. Die resultierende Lösung wurde auf eine Temperatur von 0° - 5° C abgekühlt.

### Herstellung des Farbstoffs:

Bei einer Innentemperatur von 0° - 5° C wurde unter Rühren innert 60 Minuten die Suspension C zur Lösung D zudosiert und der pH-Wert durch gleichzeitiges Zudosieren von Natronlauge (20%) bei 9 konstant gehalten. Nach beendeter Addition wurde 1 Stunde bei 0° - 5° C und anschliessend 16 Stunden bei Raumtemperatur weitergerührt. Das ausgefallene Produkt wurde abfiltriert, getrocknet und durch Umfällen aus Wasser / Ethanol gereinigt. Man erhielt 29,6 g der Verbindung Nr. 21.

### Beispiel 3

Die Verbindung Nr. 22 (Gemisch von Farbstoffen der allgemeinen Formeln (XII) und (XIII)) aus Tabelle 2 wurde folgendermassen hergestellt :
Die Suspension A, die Lösung B und die Suspension C sind die gleichen wie in Beispiel 2.

### Lösung D:

18,5 g des Natriumsalzes der N-(2-Sulfoethyl)-Gammasäure und 0,41 g Natriumacetat wurden in 75 g Wasser suspendiert und der pH-Wert mit wässriger Natriumcarbonatlösung (20%) auf 5.5 eingestellt. Die resultierende Lösung wurde auf eine Temperatur von 0° - 5° C abgekühlt.

### Herstellung des Farbstoffs:

Bei einer Innentemperatur von 0° - 5° C wurde unter Rühren innert 75 Minuten die Suspension C zur Lösung D zudosiert und der pH-Wert durch gleichzeitiges Zudosieren von wässriger Natriumcarbonatlösung (20%) bei 5,5 konstant gehalten. Nach beendeter Addition wurde 1 Stunde bei 0° - 5° C und anschliessend 16 Stunden bei Raumtemperatur weitergerührt. Das ausgefallene Produkt wurde abfiltriert und getrocknet. Man erhielt 15,9 g der Verbindung Nr. 22.

Die hergestellten Salze von Verbindungen der Formel (XII) sind in Tabelle 1 zusammengestellt. R₄ ist überall SO₃M und M ist Na.

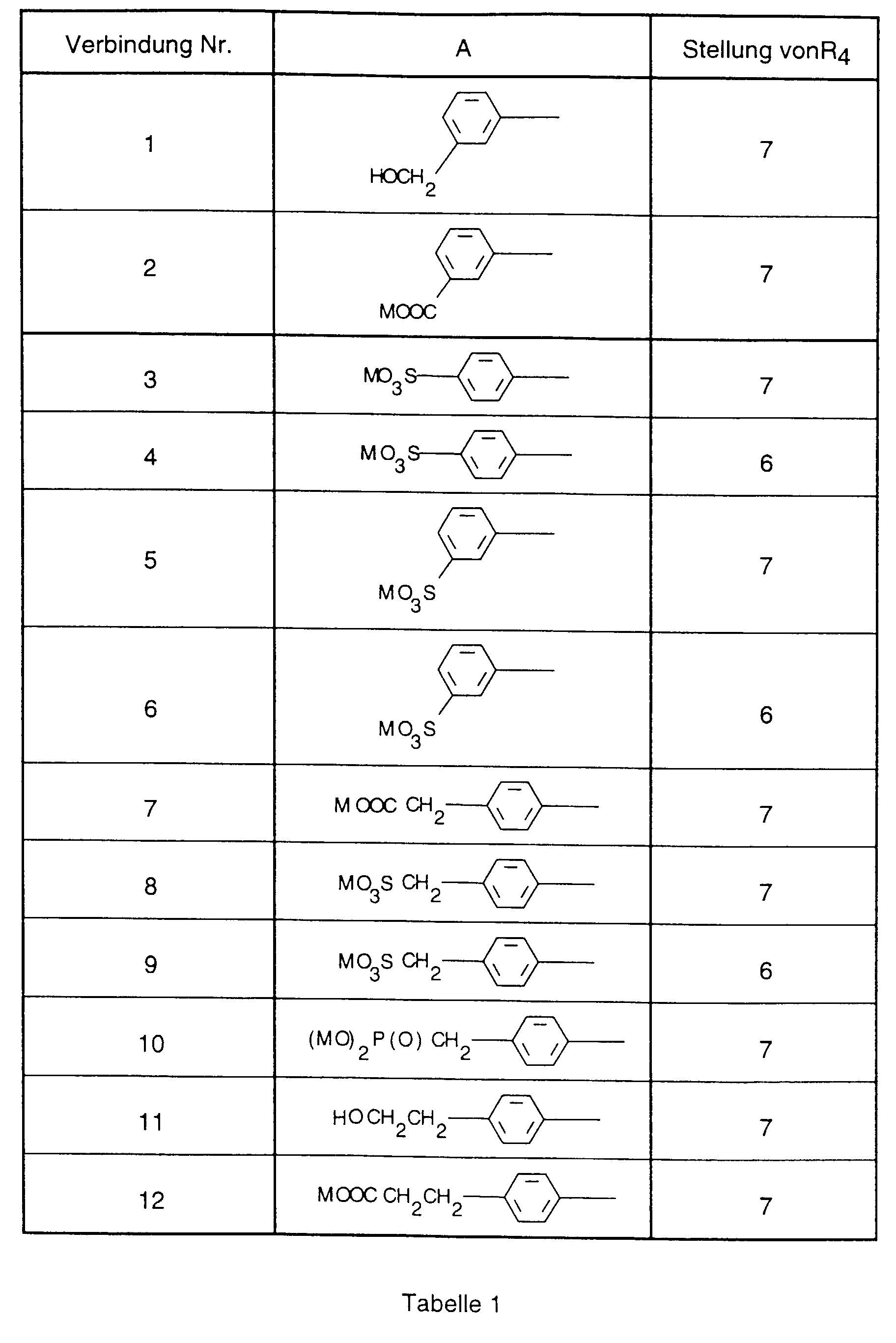

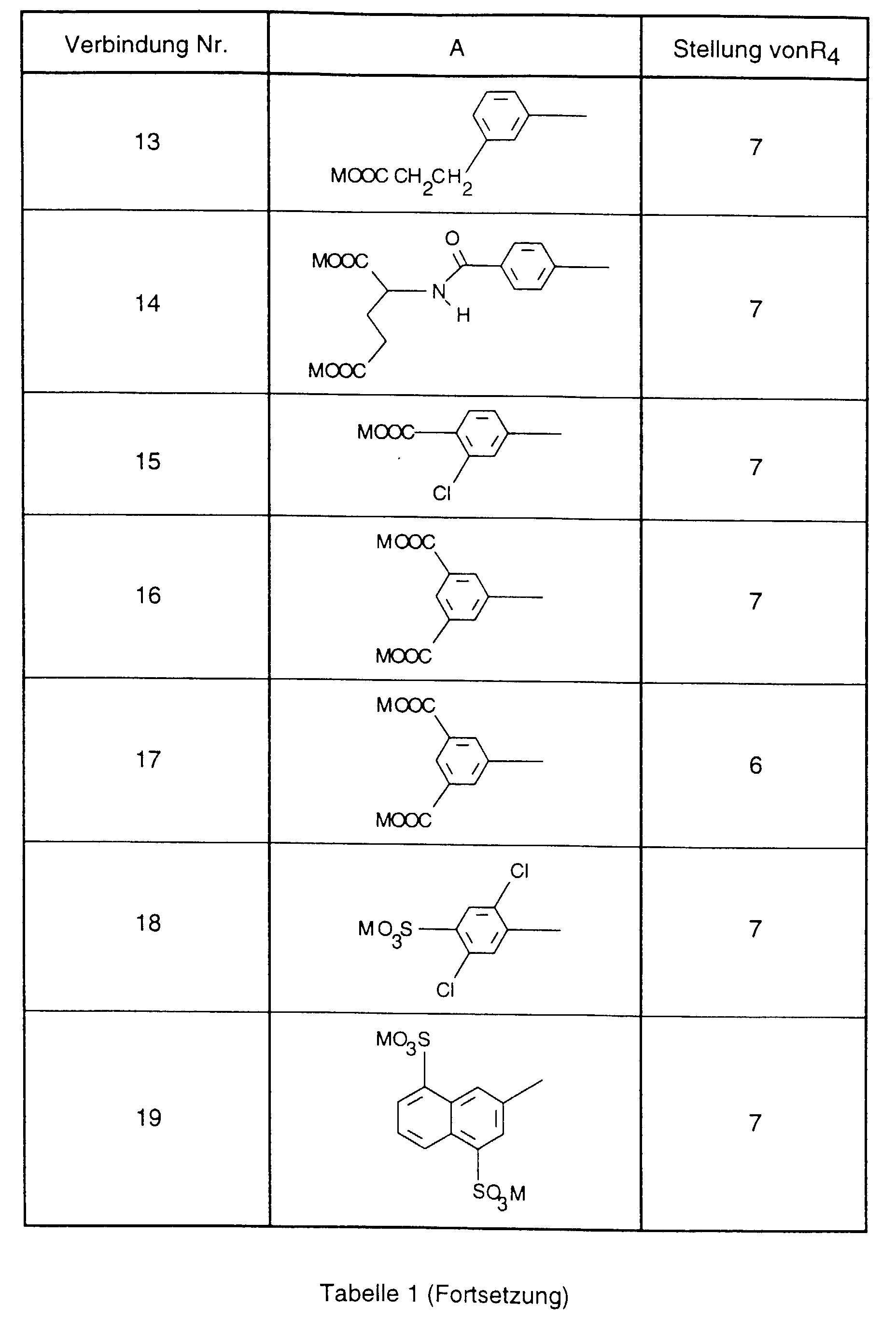

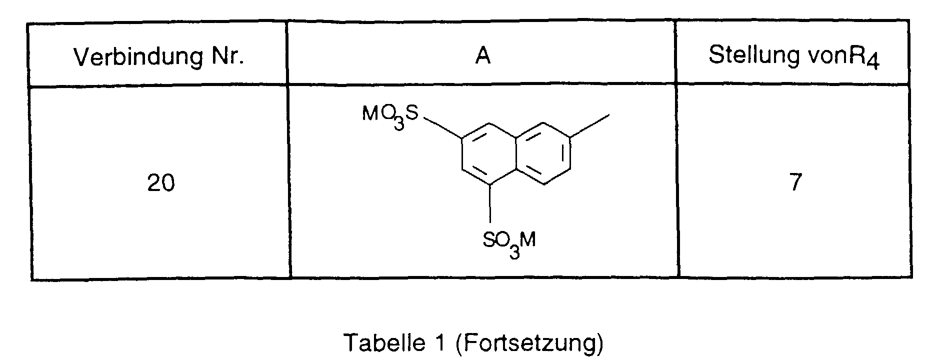

Die hergestellten Gemische von Farbstoffen der allgemeinen Formeln (XII) und (XIII) sind in Tabelle 2 zusammengestellt. R₄ ist überall SO₃M in Stellung 7 und M ist Na. Der Substituent A hat die Formel (XVI).

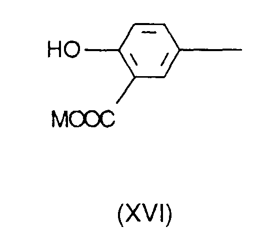

Das Verhältnis der Peakflächen der Verbindungen der Formeln (XII) und (XIII) wurde mittels HPLC bestimmt.

**Tabelle 2**

| Verbindung Nr. | Verwendete Base | pH-Wert während der Kupplungsreaktion | Verhältnis der Peakflächen der Verbindungen der Formeln (XII) und (XIII) |
|---|---|---|---|
| 21 | NaOH | 9 | 1 : 2 |
| 22 | Na₂CO₃ | 5,5 | 1 : 1.5 |

Die Natriumsalze bekannter schwarzer Disazofarbstoffe der Formel (XVII) 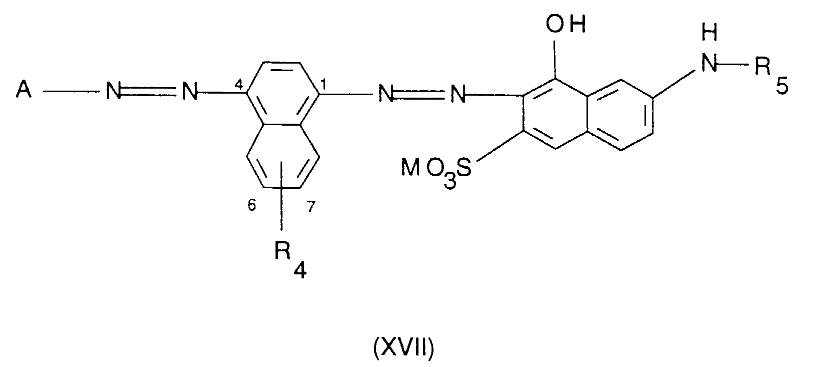 sind in Tabelle 3 zusammengestellt. R₄ ist überall SO₃M und M ist Na.

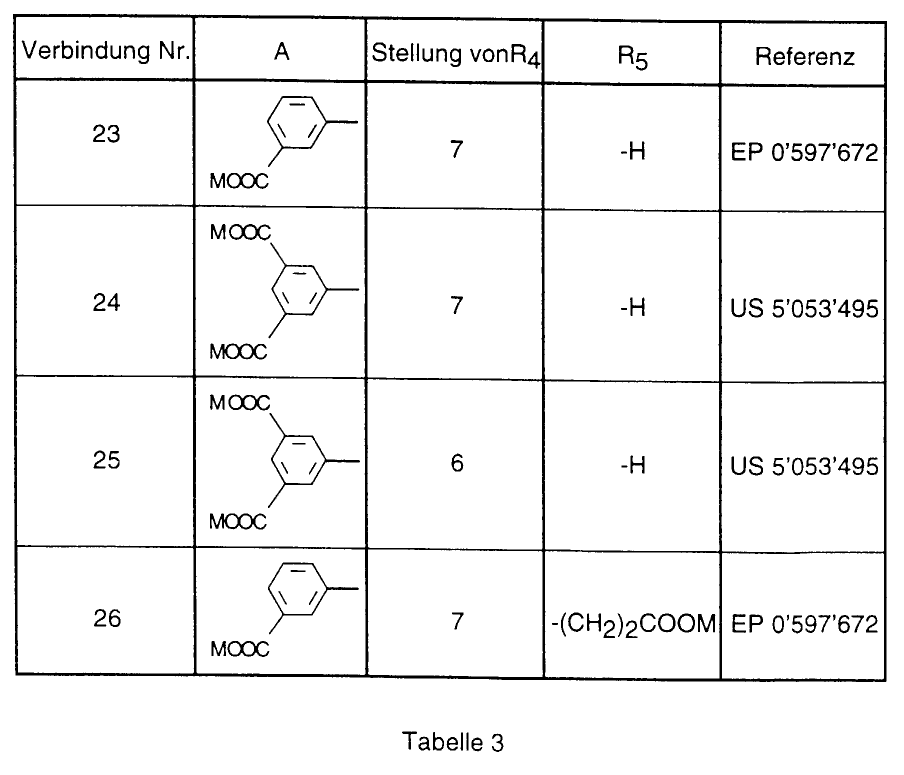

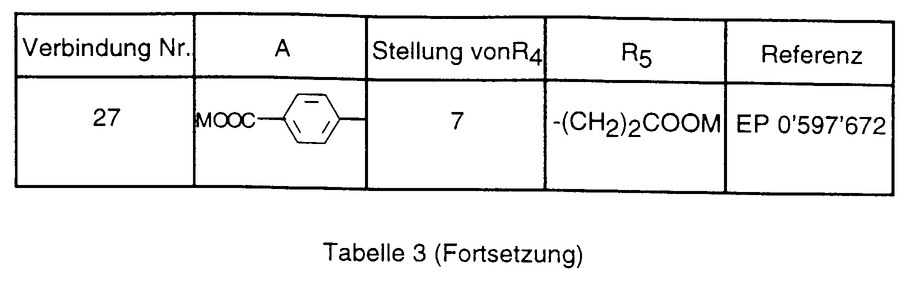

Die Natriumsalze bekannter schwarzer Disazofarbstoffe der Formel (XVIII) 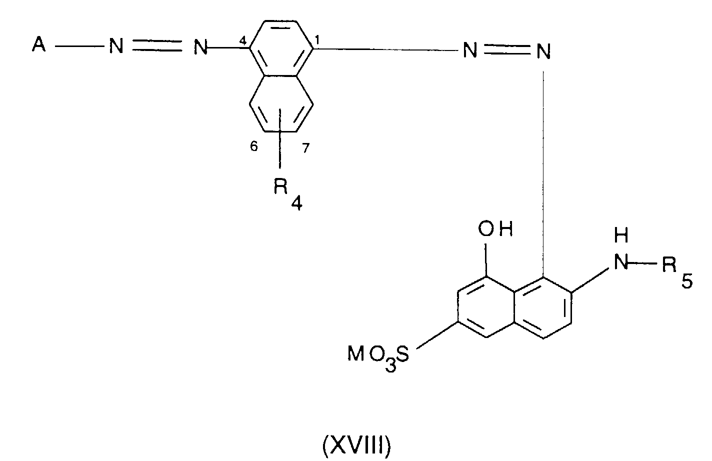 sind in Tabelle 4 zusammengestellt. R₄ ist SO₃M und M ist Na.

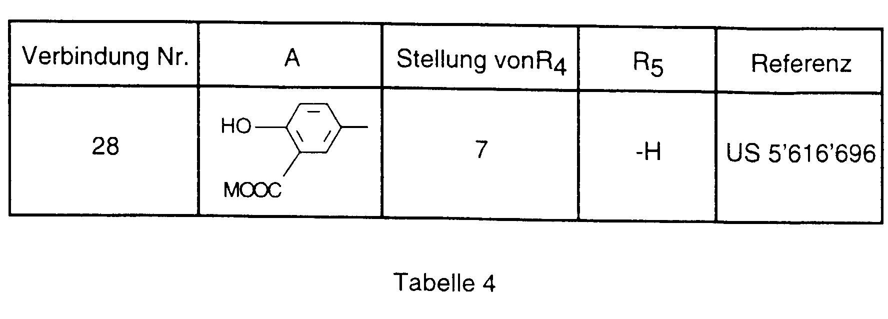

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus den Tabellen 1 und 2 und Farbstoffe des bisherigen Stands der Technik aus den Tabellen 3 und 4 eingesetzt werden. 100 g jeder Tinte wurden hergestellt, indem die benötigte Menge Farbstoff (3 - 7 g), Glycerin (5g), Tetraethylenglykol (1.1g) und eine Biocid-Lösung (Promexal X50, erhältlich bei Zeneca, Manchester, England) (1.2g) zusammen mit Wasser etwa 1 Stunde unter Rühren auf 50° C erwärmt wurden. Die erhaltene Lösung wurde auf 20° C abgekühlt, auf pH 7.5 eingestellt und durch ein Millipore®-Filter mit 0.5 µm Porendurchmesser abfiltriert. Die Farbstoffmenge wurde so gewählt, dass die optische Dichte des bedruckten Bildes für alle Farbstoffe gleich war.

### Anwendungsbeispiele von Tinten

Ein Aufnahmematerial für Prüfzwecke wurde folgendermassen hergestellt: 30 g Gelatine mit hohem isoelektrischem Punkt (Typ St 70'810, erhältlich bei Deutsche Gelatinefabriken, Eberbach, Deutschland) wurden in 360 ml deionisiertem Wasser gelöst. Zu dieser Lösung wurde 1 g eines oberflächenaktiven Stoffes (Olin 10G, erhältlich bei Olin Corporation, Norwalk, USA) zugegeben. Unmittelbar vor dem Guss wurden 6.6 g einer Lösung von 2-(4-Dimethyl-carbamoyl-pyridino)-ethan-sulfonat (3%) zugegeben und der pH-Wert auf 6.5 eingestellt. 100 g/m² dieser Lösung wurden anschliessend mittels eines Stabgiessers auf polyethylenbeschichtetes Papier gegossen. Das so hergestellte Aufnahmematerial wurde 12 Stunden getrocknet,

Die Tinten wurden anschliessend mit Hilfe eines Tintenstrahldruckers des Typs HP560 von Hewlett-Packard auf dieses Aufnahmematerial aufgebracht. Anschliessend wurden die Eigenschaften der bedruckten Muster bestimmt.

### Prüfungen

Die Prüfverfahren für (A) Farbstofflöslichkeit, (B) Farbkoordinaten, (C) Abriebfestigkeit und (D) Lichtbeständigkeit sind folgende:

### (A) Farbstofflöslichkeit

Der Farbstoff wurde in deionisiertem Wasser aufgeschlämmt und diese Aufschlämmung wurde 1 Stunde bei 50° C gerührt. Anschliessend wurde auf 20° C abgekühlt, abzentrifugiert und filtriert. Die Farbstofflöslichkeit wurde aus a) spektralen Messungen im sichtbaren Gebiet des Filtrats oder b) auf Grund einer Wägung des getrockneten Filterrückstandes berechnet.

### (B) Farbkoordinaten

L*a*b*-Werte wurden auf bedruckten Mustern mit Hilfe eines Spektrometers Gretag SPM 100, erhältlich bei Gretag AG, Regensdorf, Schweiz, gemessen.

### (C) Abriebfestigkeit

Die Abriebfestigkeit der bedruckten Muster wurde dadurch bestimmt, dass ein Farbfeld hoher Dichte mit einem leicht feuchten Daumen gerieben wurde. Das Ausmass der Abriebfestigkeit wird folgendermassen angegeben:
- ⊕ :: Kein oder sehr wenig Abrieb
- ◇ :: Mässiger Abrieb
- ⌀ :: Starker Abrieb

### (D) Lichtbeständigkeit

Die bedruckten Muster wurden in einem Atlas Ci35A Weather-O-Meter® mit einer 6500 W Xenon-Lampe so lange bestrahlt, bis 20 kJoule/cm² erreicht waren. Der Dichteverlust wurde mit einem X-Rite®- Densitometer gemessen. Er wird als prozentualer Dichteverlust ausgehend von der ursprünglichen Dichte angegeben.

Die Farbstofflöslichkeiten, die nach dem oben angegebenen Verfahren bestimmt wurden, sind in Tabelle 5 angegeben.

**Tabelle 5**

| Farbstoff Nr. | Löslichkeit (in g per 100 ml) |
|---|---|
| 3 | > 20 |
| 5 | 16 |
| 8 | > 20 |
| 16 | > 20 |
| 24 | 12 |
| 26 | 17 |

Die erfindungsgemässen Farbstoffe 3, 8 und 16 zeigen eine wesentlich bessere Löslichkeit als die bekannten Farbstoffe 24 und 26.

Die Absorptionsmaxima und die Ergebnisse der Prüfungen (B) bis (D) sind in Tabelle 6 für die erfindungsgemässen Farbstoffe und in Tabelle 7 für die Vergleichsfarbstoffe zusammengestellt.

**Tabelle 6**

| Verbindung Nr. | λₘₐₓ in Wasser (nm) | L*a*b*-Werte | Abriebwert | Dichteverlust in % |
|---|---|---|---|---|
| 1 | 582 / 440 | | ◇ | |
| 2 | 573 | 2,1 / 2,0 / 0,3 | ◇ | 0 |
| 3 | 575 | 4,3 / 2,5 / -2,5 | ◇ | 5 |
| 4 | 577 | 8,9 / 14,4 / -7,5 | ⊕ | 7 |
| 5 | 576 | 7,3 / 2,0 / -2,4 | ⊕ | 6 |
| 6 | 573 | 7,5/14,6/-6,4 | ⊕ | 8 |
| 7 | 576 | 15,5/5,2/-5,9 | ⊕ | 1 |
| 8 | 577 | 17,3/4,0/-6,6 | ⊕ | 14 |
| 9 | 575 | 22,9/11,0/-5,2 | ⊕ | 14 |
| 10 | 578 | 2,0/1,5/0,1 | Ø | 13 |
| 11 | 577 | 18,3/4,2/-3,1 | ⊕ | 11 |
| 12 | 576 | 12,1/3,8/-3,1 | ⊕ | 4 |
| 13 | 575 | | Ø | 4 |
| 14 | 576 | 19,5/7,5/2,4 | ◇ | 2 |
| 15 | 590 | 4,7/4,5/-1,7 | ⊕ | 8 |
| 16 | 580 | 3,8/3,4 / 0,5 | Ø | 1 |
| 17 | 568 | 5,7 / 2,6 / 2,3 | Ø | 2 |
| 18 | 553 | 3,5/4,4/0,3 | ⊕ | 5 |
| 19 | 581 | | ⊕ | 1 |
| 20 | 582 | 9,4 / 3,8 / -3,6 | ⊕ | 3 |
| 21 | 565 | 2.3 / 1.0 / 0.0 | | 6 |
| 22 | | 9.9 / 4.4 / -5.8 | | 5 |

**Tabelle 7**

| Verbindung Nr. | λₘₐₓ in Wasser (nm) | L*a*b*-Werte | Abriebwert | Dichteverlust in % |
|---|---|---|---|---|
| 23 | 570 | | Ø | 2 |
| 24 | 571 | 27,0 / -0,7 / -8,8 | ⊕ | |
| 25 | 556 | 10,6 / 11,7 / -0,6 | Ø | 2 |
| 26 | 568 | 14,7 / 14,4 / -14,6 | | 8 |
| 27 | 564 | 23,7 / 15,1 / -16,6 | | 12 |
| 28 | | 18.8 / 18.1 / -4.1 | | |

Damit Schwarzfarbstoffe einen neutralen Farbton zeigen, müssen bei den L*a*b*-Farbkoordinaten die Werte von a* und b* Null sein.
Ein Vergleich der gemessenen Farbkoordinaten von bedruckten Mustern, in denen die Tinten erfindungsgemässe Farbstoffe aus Tabelle 6 enthalten, zeigt klar, dass vor allem die erfindungsgemässen Farbstoffe 5, 7, 8, 12, 15, 18 und 20 neutrale Schwarzfarbtöne ergeben und gleichzeitig eine sehr gute Lichtbeständigkeit haben, kein Bronzing zeigen sowie eine hohe Abriebfestigkeit aufweisen.
Die schon bekannten Schwarzfarbstoffe 23 - 28 aus Tabelle 7 zeigen in keinem Fall alle gewünschten 3 Eigenschaften (neutraler Schwarzfarbton, hohe Abriebfestigkeit und gute Lichtbeständigkeit) miteinander.

Vergleichsversuche wurden ebenfalls mit 2 gewerblich erhältlichen schwarzen Tinten durchgeführt (Vergleichstinten 1 und 2). Die Ergebnisse mit diesen Tinten sind in Tabelle 8 zusammengestellt.

**Tabelle 8**

| Schwarztinte | L*a*b*-Werte | Abriebwert | Dichteverlust in % |
|---|---|---|---|
| Vergleichstinte 1 | 4,7 / 7,3 / -5,5 | ⊕ | 9 |
| Vergleichstinte 2 | 4,2 / 5,7 / -1,0 | ◇ | 13 |

Die Lichtbeständigkeit der erfindungsgemässen Farbstoffe (Tabelle 6) ist wesentlich besser als diejenige der Farbstoffe, die in den gewerblich erhältlichen Tinten (Tabelle 8) enthalten sind.

## Patentansprüche

1. Disazofarbstoffe der Formel (IX) 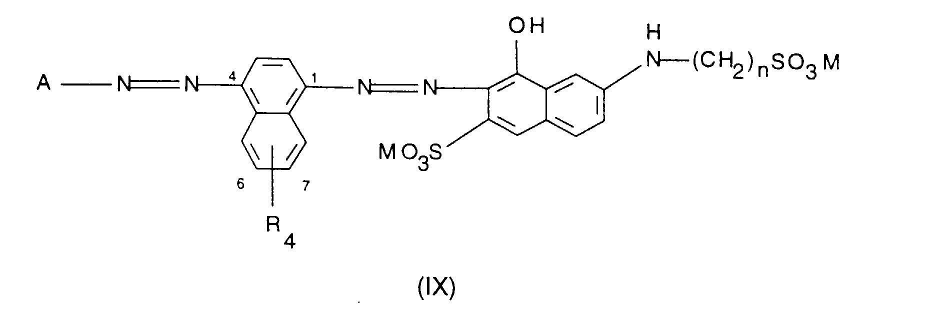 und der Formel (X) 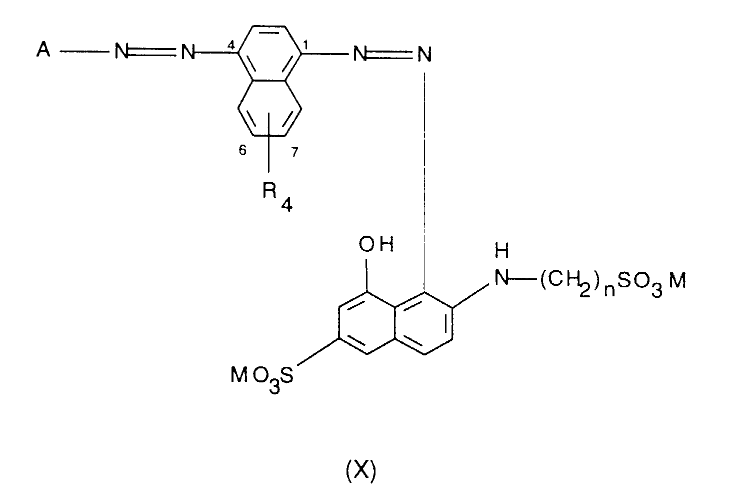 worin
A einen gegebenenfalls substituierten Phenyl- oder Naphthyl-Rest der allgemeinen Formel (Xl) bedeutet, 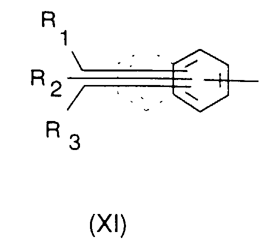
worin R₁, R₂ und R₃ unabhängig voneinander für
Wasserstoff, SO₃M, COOM; Carboxamido, N-substitiertes Carboxamido, einen gegebenenfalls substituierten Alkylrest mit 1 bis 18 C-Atomen, einen gegebenenfalls substituierten Alkoxyrest mit 1 bis 18 C-Atomen, Halogen, Hydroxy, Cyan oder einen gegebenenfalls substituierten Thioalkylrest mit 1 bis 18 C-Atomen stehen, wenn A ein substituierter Phenyl-Rest ist;
oder unabhängig voneinander für
Wasserstoff, SO₃M oder COOM stehen, wenn A ein substituierter Naphthyl-Rest ist;
R⁴ für Wasserstoff oder SO₃M steht;
n 2, 3 oder 4 ist;
und
M Wasserstoff, ein Metallkation oder ein Ammoniumkation bedeutet, das gegebenenfalls einen oder mehrere Alkylreste oder substituierte Alkylreste mit jeweils 1 bis 18 C-Atomen aufweist.

2. Disazofarbstoffe nach Anspruch 1, dadurch gekennzeichnet, dass A ein substituierter Phenyl-Rest ist, in dem der Rest R₁ eine SO₃M- oder COOM-Gruppe ist und die Reste R₂ und R₃ aus der Gruppe bestehend aus Wasserstoff, Chlor, Brom, Hydroxy, COOM, gegebenenfalls substituiertem Alkyl mit 1 bis 12 C-Atomen und gegebenenfalls substituiertem Alkoxy mit 1 bis 12 C-Atomen ausgewählt sind;
oder
A ein substituierter Naphthyl-Rest ist, der mit 1 bis 3 SO₃M- oder COOM-Gruppen substituiert ist.

3. Disazofarbstoffe nach Anspruch 2, dadurch gekennzeichnet, dass
A ein substituierter Phenyl-Rest ist, in dem der Rest R₁ eine SO₃M- oder COOM-Gruppe ist und die Reste R₂ und R₃ aus der Gruppe bestehend aus Wasserstoff, Chlor, Hydroxy, COOM, gegebenenfalls substituiertem Alkyl mit 1 bis 6 C-Atomen und gegebenenfalls substituiertem Alkoxy mit 1 bis 6 C-Atomen ausgewählt sind;
oder
A ein substituierter Naphthyl-Rest ist, der mit 1 oder 2 SO₃M-Gruppen substituiert ist.

4. Disazofarbstoffe nach einem der Ansprüche 1 bis 3, dadurch gekennzeichnet, dass der Rest R₄ in Stellung 6 oder 7 steht.

5. Disazofarbstoffe nach einem der Ansprüche 1 bis 4, dadurch gekennzeichnet, dass die Zahl der SO₃M-Gruppen grösser ist als die Zahl der COOM-Gruppen.

6. Disazofarbstoffe nach einem der Ansprüche 1 bis 5, dadurch gekennzeichnet, dass n gleich 2 ist.

7. Verfahren zur Herstellung der Disazofarbstoffe gemäss einem oder mehreren der Ansprüche 1 bis 6, dadurch gekennzeichnet, dass ein Amin der allgemeinen Formel (XIV) 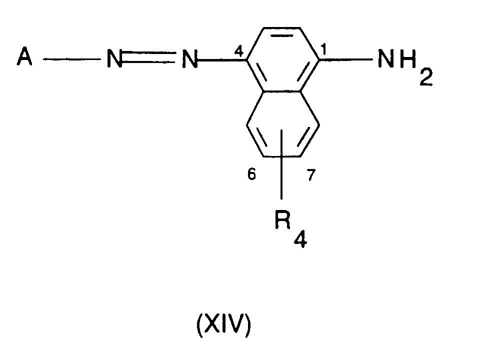 worin
A und R₄ wie in Anspruch 1 definiert sind, diazotiert und anschliessend mit einer Verbindung der allgemeinen Formel (XV) 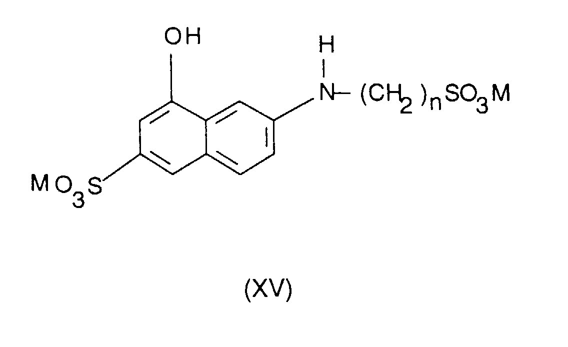 worin
n und M wie in Anspruch 1 definiert sind, gekuppelt wird.

8. Verwendung von Disazofarbstoffen gemäss einem oder mehreren der Ansprüche 1 bis 6 zum Färben von cellulosehaltigen Materialien, Papier, Baumwolle, Viskose, Leder und Wolle.

9. Flüssige Farbstoffpräparationen, die mindestens einen Farbstoff oder eine Mischung von Farbstoffen nach einem oder mehreren der Ansprüche 1 bis 6 enthalten.

10. Tinten für den Tintenstrahldruck, die mindestens einen Farbstoff oder eine Mischung von Farbstoffen nach einem oder mehreren der Ansprüche 1 bis 6 enthalten.

## Claims

1. Disazo dyes of formula (IX) 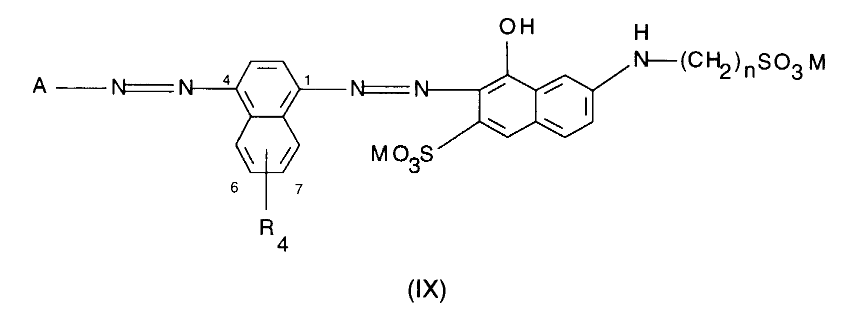 and of formula (X) 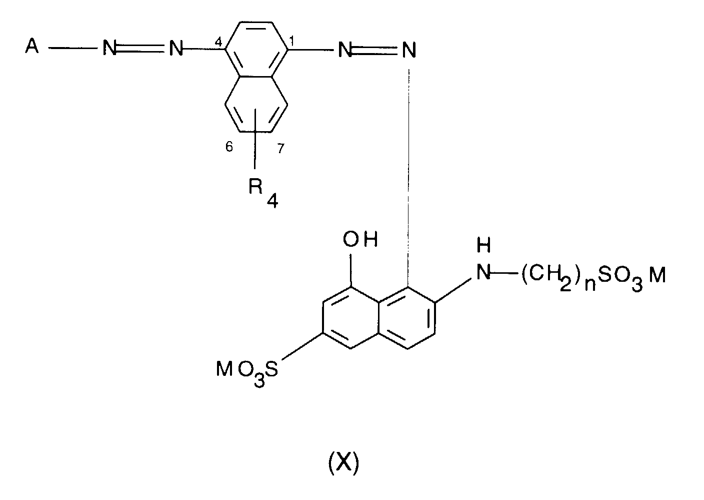 wherein
A represents optionally substituted phenyl or optionally substituted naphthyl of general formula (Xl), 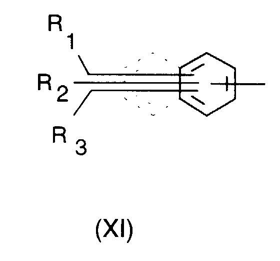
wherein R₁, R₂ and R₃ independently represent
hydrogen, SO₃M, COOM; carboxamido, N-substituted carboxamido, optionally substituted alkyl with 1 to 18 C atoms, optionally substituted alkoxy with 1 to 18 C atoms, halo, hydroxy, cyano or optionally substituted thioalkyl with 1 to 18 C atoms; provided that A represents substituted phenyl;
or independently represent
hydrogen, SO₃M or COOM; provided that A represents substituted naphthyl;
R₄ represents hydrogen or SO₃M;
n is 2, 3 or 4;
and
M represents hydrogen, a metal cation or an ammonium cation, optionally substituted by one or more alkyl or substituted alkyl groups each having from 1 to 18 C atoms.

2. Disazo dyes according to claim 1, wherein
A represents substituted phenyl, where R₁ represents SO₃M or COOM and R₂ and R₃ are selected from the group consisting of hydrogen, chloro, bromo, COOM, optionally substituted alkyl with 1 to 12 C atoms and optionally substituted alkoxy with 1 to 12 C atoms;
or
A represents substituted naphthyl, substituted with 1 to 3 SO₃M or COOM groups.

3. Disazo dyes according to claim 2, wherein
A represents substituted phenyl, where R₁ represents SO₃M or COOM and R₂ and R₃ are selected from the group consisting of hydrogen, chloro, hydroxy, COOM, optionally substituted alkyl with 1 to 6 C atoms and optionally substituted alkoxy with 1 to 6 C atoms;
or
A represents substituted naphthyl, substituted with 1 or 2 SO₃M groups.

4. Disazo dyes according to anyone of claims 1 to 3, wherein
R₄ is in position 6 or 7.

5. Disazo dyes according to anyone of claims 1 to 4, wherein the number of SO₃M groups is higher than the number of COOM groups.

6. Disazo dyes according to anyone of claims 1 to 5, wherein n is equal to 2.

7. Process for the preparation of disazo dyes according to anyone of claims 1 to 6, wherein an amine of general formula (XIV) 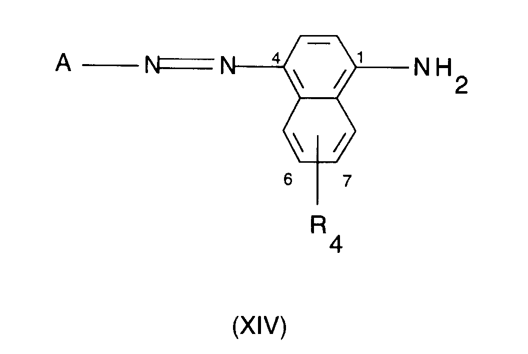 where
A and R⁴ are as defined in claim 1,
is diazotized and coupled with a compound of general formula (XV) 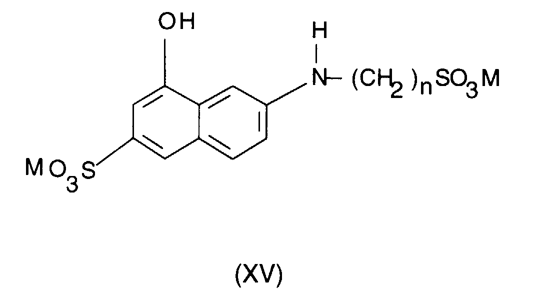 wherein
n and M are as defined in claim 1.

8. Process for dyeing cellulose containing materials, paper, cotton, viscose, leather and wool by applying thereto a disazo dye according to anyone of claims 1 to 6.

9. Liquid dye preparations comprising a dye or a mixture of dyes according to anyone of claims 1 to 6.

10. Inks for ink jet printing comprising a dye or a mixture of dyes according to anyone of claims 1 to 6.

## Revendications

1. Colorants disazoïques de formule (IX) 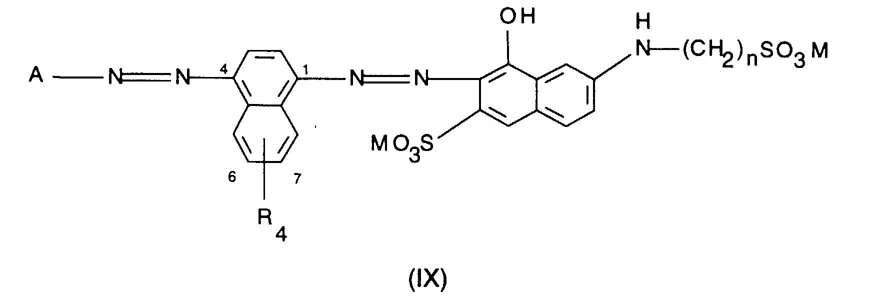 et de formule (X) 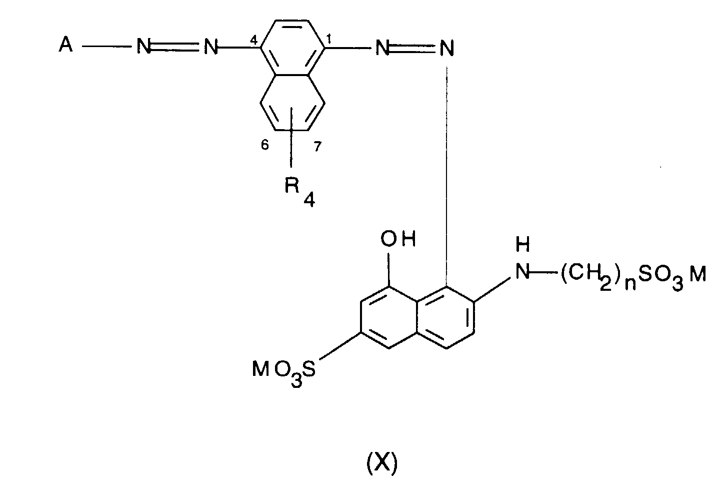 dans lesquelles
A représente un radical phényle optionellement substitué ou un radical naphtyle optionellement substitué de la formule générale (XI), 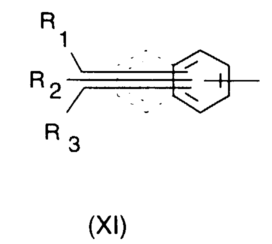
dans laquelle R₁, R₂ et R₃ représentent indépendamment
un atome d'hydrogène, un radical SO₃M, un radical COOM; un radical carboxamido, un radical carboxamido substitué à l'atome d'azote, un radical alkyle optionellement substitué ayant de 1 à 18 atomes de carbone, un radical alcoxy optionellement substitué ayant de 1 à 18 atomes de carbone, un atome d'halogène, un radical hydroxy, un radical cyano ou un radical thioalkyle optionellement substitué ayant de 1 à 18 atomes de carbone, quand A représente un radical phényle substitué;
ou représentent indépendamment
un atome d'hydrogène, un radical SO₃M ou un radical COOM, quand A représente un radical naphtyle substitué;
R₄ représente un atome d'hydrogène ou un radical SO₃M;
n vaut 2, 3 ou 4;
et
M représente un atome d'hydrogène, un cation métallique ou un groupe ammonium optionellement substitué par un ou plusieurs radicaux alkyle ou radicaux alkyle substitués ayant chacun de 1 à 18 atomes de carbone.

2. Colorants disazoïques selon la revendication 1, dans lesquelles
A représente un radical phényle substitué, où R₁ représente un groupe SO₃M ou COOM et R₂ et R₃ sont choisis parmi le groupe constitué de l'atome d'hydrogène, de l'atome de chlore, de l'atome de brome, du radical hydroxy, du radical COOM, du radical alkyle optionellement substitué ayant de 1 à 12 atomes de carbone ou du radical alcoxy optionellement substitué ayant de 1 à 12 atomes de carbone;
ou
A représente un radical naphtyle substitué par un à trois substituants SO₃M ou COOM.

3. Colorants disazoïques selon la revendication 2, dans lesquelles A représente un radical phényle substitué, où R₁ représente un groupe SO₃M ou COOM et R₂ et R₃ sont choisis parmi le groupe constitué de l'atome d'hydrogène, de l'atome de chlore, du radical hydroxy, du radical COOM, du radical alkyle optionellement substitué ayant de 1 à 6 atomes de carbone ou du radical alcoxy optionellement substitué ayant de 1 à 6 atomes de carbone;
ou
A représente un radical naphtyle substitué par un ou deux substituants SO₃M.

4. Colorants disazoïques selon une des revendications 1 à 3, où R₄ est en position 6 ou 7.

5. Colorants disazoïques selon une des revendications 1 à 4, où le nombre des groupes SO₃M est supérieur au nombre des groupes COOM.

6. Colorants disazoïques selon une des revendications 1 à 5, où n vaut 2.

7. Procédé de préparation des colorants disazoïques selon une des revendications 1 à 6, où un composé amine de formule générale (XIV) 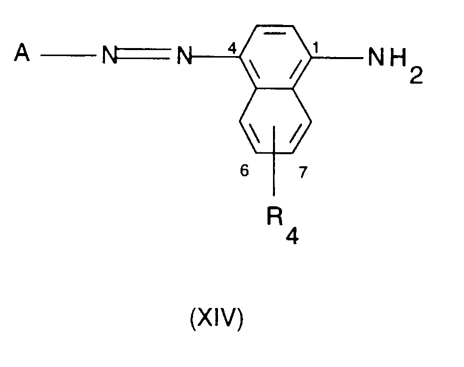 dans laquelle
A et R₄ sont tels que définis dans la revendication 1, est diazoté, puis copulé avec un composé de la formule générale (XV) 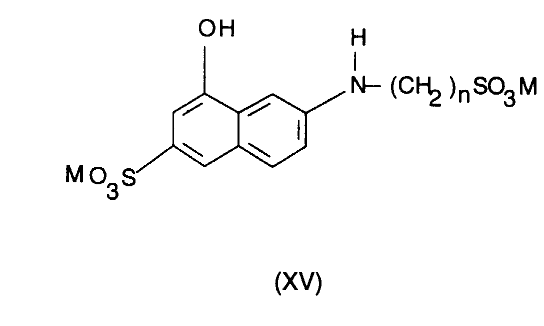 dans laquelle
n et M sont que tels que définis dans la revendication 1.

8. Utilisation des colorants disazoïques selon une ou plusieurs des revendications 1 à 6 pour la teinture des matériaux cellulosiques, du papier, du coton, de la viscose, du cuir et de la laine.

9. Préparations liquides contentant au moins un colorant ou un mélange de colorants selon une ou plusieurs des revendications 1 à 6.

10. Encres d'impression selon la méthode du jet d'encre qui comprennent au moins un colorant ou un mélange de colorants selon une ou plusieurs des revendications 1 à 6.
